Europäisches Patentamt

European Patent Office

Office européen des brevets

(19)

(11) Numéro de publication : **0 223 686**
B1

(12) **FASCICULE DE BREVET EUROPÉEN**

(45) Date de publication du fascicule du brevet :
26.04.89

(51) Int. Cl.⁴ : **B 60 K 41/26**

(21) Numéro de dépôt : **86402434.4**

(22) Date de dépôt : **30.10.86**

(54) **Circuit de freinage d'au moins un moteur à fluide.**

(30) Priorité : **08.11.85 FR 8516608**

(43) Date de publication de la demande :
**27.05.87 Bulletin 87/22**

(45) Mention de la délivrance du brevet :
**26.04.89 Bulletin 89/17**

(84) Etats contractants désignés :
**DE FR GB**

(56) Documents cités :
**DE–A– 3 149 473**
**US–A– 3 898 812**
**US–A– 3 923 129**

(73) Titulaire : **POCLAIN HYDRAULICS Société Anonyme de droit français**
**Boîte Postale no 12**
**F-60410 Verberie (FR)**

(72) Inventeur : **Mefort, Jacky Alexis**
**201 rue des Gravelles Jaux Dizocourt**
**F-60880 Le Meux (FR)**
Inventeur : **Livolsi, Jean-Marc Etienne**
**4, rue du Lion Noir**
**F-60190 Estrees St Denis (FR)**

(74) Mandataire : **Hoisnard, Jean-Claude et al**
**Cabinet Beau de Lomenie 55, rue d'Amsterdam**
**F-75008 Paris (FR)**

EP 0 223 686 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention se rapporte à un circuit de freinage d'au moins un moteur à fluide constitué par ledit moteur à fluide, muni d'un premier et d'un deuxième raccord principal, une source principale de fluide sous pression, munie d'un raccord de refoulement, un premier conduit principal reliant ledit raccord de refoulement audit premier raccord principal du moteur, un deuxième conduit principal, branché sur le deuxième raccord principal du moteur, un dispositif principal de distribution de fluide susceptible d'occuper au moins des première et deuxième positions, réalisant, dans sa première position, l'alimentation du premier raccord principal du moteur en fluide sous pression provenant du raccord de refoulement de ladite source principale, et supprimant, dans sa deuxième position, ladite alimentation du premier raccord principal en fluide sous pression provenant dudit raccord de refoulement, un moyen sélectif de retenue de fluide, qui est disposé sur le deuxième conduit principal, et, qui, lorsque le dispositif principal de distribution de fluide est placé dans sa deuxième position, constitue une restriction vis-à-vis de l'écoulement du fluide dans ce deuxième conduit principal, formant alors frein hydrostatique du moteur, et, un frein, qui est indépendant du moteur, qui y est attelé et qui est muni d'un dispositif de commande à fluide sous pression susceptible d'être relié sélectivement à une source de fluide sous pression. Un tel circuit est p. ex. connu du document US-A-3898812. Lorsque la pédale de frein est enfoncée le plateau de la pompe de la transmission hydrostatique revient à l'inclinaison zéro et un freinage hydrostatique a lieu. Plus tard si la pédale de frein est plus enfoncée un freinage par un frein indépendant est procuré.

Selon la technique connue, les circuits d'alimentation du moteur et de commande du frein indépendant du moteur sont distincts, si bien qu'il faut souvent deux organes de commande distincts, et, en tout cas, deux sources distinctes de fluide sous pression : une première destinée à l'alimentation du moteur et une deuxième pour la commande du frein indépendant du moteur.

Cette technique antérieure est donc déjà coûteuse en ce qui concerne les moyens de commande du circuit. Elle l'est encore davantage si on observe qu'un moteur à fluide, lorsqu'il n'est plus alimenté en fluide sous pression, est apte à développer un effet de freinage, mais que jusqu'à présent il n'a pas été proposé de combiner l'effet de freinage hydrostatique et le freinage procuré par le frein indépendant, d'où la nécessité de choisir des dimensions excessives de ce frein indépendant.

L'invention entend remédier à ces inconvénients et pour ce faire, propose de compléter le circuit de freinage précité par une valve de freinage a au moins deux positions, qui est munie d'une commande de réglage de sa position, par un conduit de freinage comprenant deux tronçons, qui relient, un premier tronçon, le deuxième conduit principal à la valve de freinage, le deuxième tronçon, la valve de freinage au dispositif de commande du frein indépendant, et par un conduit de décharge reliant la valve de freinage à un réservoir de décharge sans pression, les au moins deux positions de la valve de freinage correspondant, la première position, à la mise en communication du deuxième tronçon du conduit de freinage avec le conduit de décharge, et, la deuxième position, à la mise en communication des premier et deuxième tronçons dudit conduit de freinage et à leur isolement du conduit de décharge. Dans ce circuit, le dispositif principal de distribution de fluide est muni d'une commande de réglage de sa position, cependant qu'est prévu un moyen de synchronisation des commandes de réglage des positions du dispositif principal de distribution de fluide et de la valve de freinage, ce moyen de synchronisation réalisant, à partir de la configuration dans laquelle le dispositif principal de distribution de fluide et la valve de freinage sont placés dans leur première position respective, les commandes des mises en place ultérieures de ce dispositif principal de distribution de fluide et de cette valve de freinage dans leur deuxième position respective.

Un avantage d'un circuit conforme à l'invention réside précisément dans la possibilité de prendre en compte l'apport du freinage hydrostatique au moment du choix des dimensions du frein indépendant : selon que le moteur est prévu pour participer, ou non au freinage, le couple de freinage que doit développer le frein indépendant varie dans le rapport de 1 à 3, et les dimensions de ce frein varient en correspondance, d'où l'intérêt de prévoir la combinaison des freinages pour pouvoir choisir un frein indépendant de petites dimensions, peu coûteux et d'encombrement faible.

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels :

la figure 1 est le schéma d'un premier circuit conforme à l'invention ; et,

la figure 2 est le schéma d'un deuxième circuit, également conforme à l'invention.

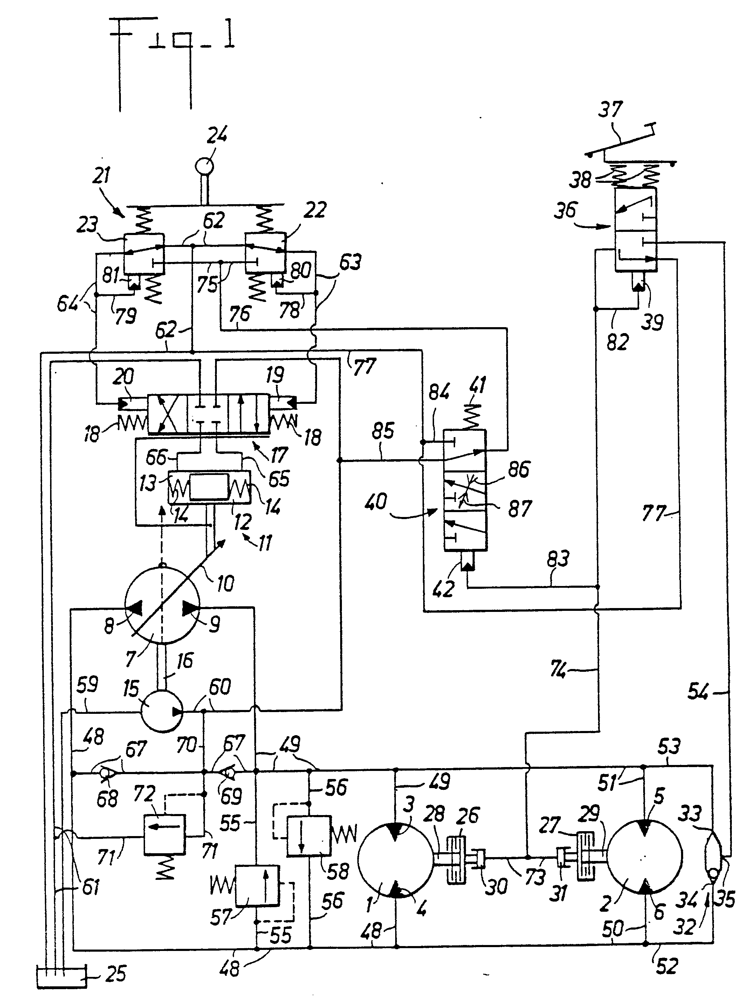

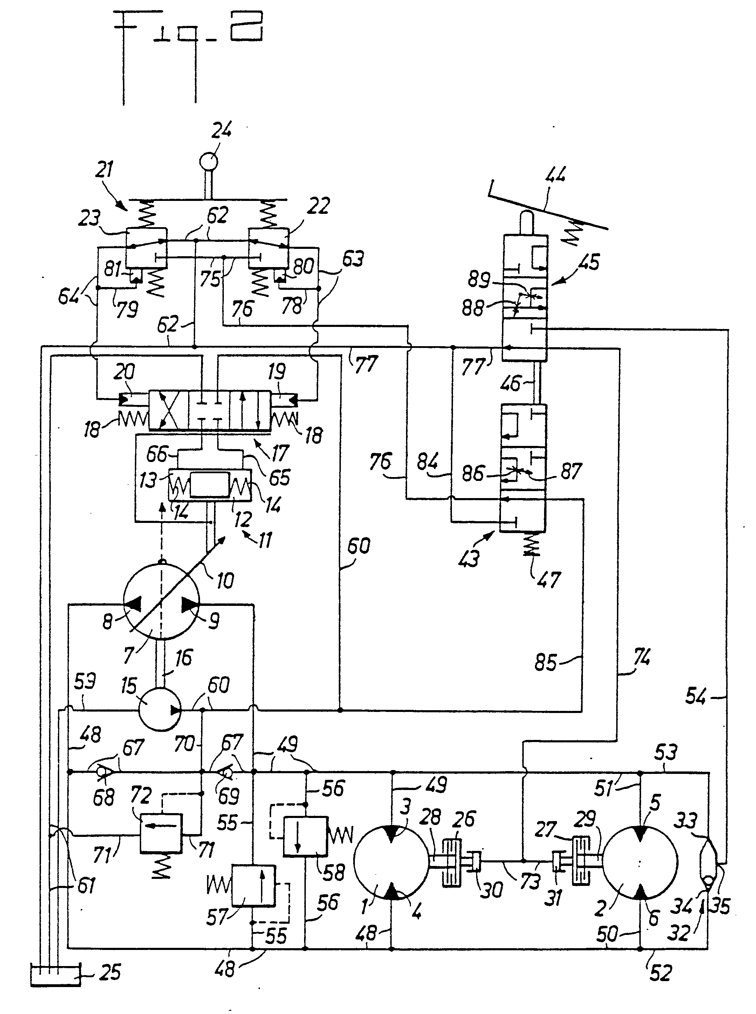

Chacun des circuits des figures 1 et 2 comportent :

- deux moteurs hydrauliques réversibles 1 et 2, possédant chacun deux raccords principaux 3, 4, et, 5, 6, respectivement ;

- une pompe principale 7 à cylindrée continûment variable, possédant deux raccords principaux 8, 9, un plateau inclinable 10 pour le réglage de sa cylindrée, et un vérin à double effet 11, a deux chambres 12, 13 pour le réglage de l'inclinaison du plateau 10, des ressorts 14 étant aptes à maintenir l'inclinaison du plateau 10 en position neutre (cylindrée égale à zéro) en l'absence de pression dans les chambres 12, 13 ;

- une pompe de pilotage 15, entraînée par le même arbre 16 que la pompe principale 7,

- un premier distributeur 17 à trois positions, attelé à un double ressort 18 de rappel dans sa deuxième position, et à deux vérins 19, 20 d'effets antagonistes, aptes, lorsqu'ils sont alimentés en fluide sous pression, à placer ce premier distributeur 17 respectivement dans sa première, ou dans sa troisième position ; le premier distributeur 17, le vérin à double effet 11 et le plateau inclinable 10 constituant le « dispositif principal de distribution de fluide » ;

- un manipulateur 21 à deux valves 22, 23, muni d'un levier 24 de manipulation ;

- un réservoir de fluide sans pression 25 ;

- des freins mécaniques (à disques) 26, 27, attelés par des arbres 28, 29, aux moteurs 1, 2, et munis de vérins 30, 31 de commande du freinage, respectivement ;

- un clapet navette 32 à deux raccords d'entrée 33, 34 et un raccord de sortie 35.

Les conduits suivants relient les divers constituants :

- le conduit 48 relie le raccord principal 8 de la pompe 7 au raccord principal 4 du moteur 1 ;

- le conduit 49 relie le raccord principal 9 de la pompe 7 au raccord principal 3 du moteur 1 ;

- le conduit 50 relie le raccord principal 6 du moteur 2 au conduit 48 ;

- le conduit 51 relie le raccord principal 5 du moteur 2 au conduit 49,

- le conduit 52 relie le raccord d'entrée 34 du clapet navette 32 au conduit 50 ;

- le conduit 53 relie le raccord d'entrée 33 du clapet navette 32 au conduit 51 ;

- le conduit 54 est accordé au raccord de sortie 35 du clapet navette 32 ;

- deux conduits 55, 56 relient, chacun, le conduit 48 au conduit 49, cependant que des clapets de décharge tarés 57, 58 sont disposés sur les conduits 55, 56 et sont aptes à permettre le passage du fluide du conduit 48 vers le conduit 49, et, du conduit 49 vers le conduit 48, respectivement ;

- le conduit d'aspiration 59 de la pompe 15 relie cette pompe au réservoir 25 ;

- le conduit de refoulement 60 de la pompe 15 relie cette pompe au premier distributeur 17 ;

- le conduit 61 relie le premier distributeur 17 au réservoir 25 ;

- le conduit 62 relie chacune des deux valves 22, 23 au réservoir 25 ;

- les conduits 63, 64 relient les valves 22, 23 aux vérins 19, 20, respectivement ;

- les conduits 65, 66 relient le premier distributeur 17 aux chambres 12, 13, du vérin à double effet 11, respectivement ;

- le conduit 67 relie les conduits 48, 49, cependant qu'un premier clapet de non retour 68 est placé sur ce conduit 67 et interdit le passage du fluide du conduit 48 vers le conduit 49, et qu'un deuxième clapet de non retour 69, placé sur le conduit 67 entre le conduit 49 et le premier clapet de non retour 68, interdit le passage du fluide du conduit 49 vers le conduit 48 ;

- le conduit 70 relie le conduit de refoulement 60 de la pompe 15 à la partie du conduit 67 comprise entre les premier, 68, et deuxième, 69, clapets de non retour ;

- le conduit 71 relie la partie du conduit 67 comprise entre les premier, 68, et deuxième, 69, clapets de non retour au conduit 61, cependant qu'un clapet de décharge taré 72 est placé sur ce conduit 71 et permet le passage contrôlé du fluide des conduits 67, 70 vers le conduit 61 ;

- les vérins 30, 31 sont reliés par un conduit 73, lui-même relié à un conduit 74 ;

- les valves 22, 23 sont en outre reliées par un conduit 75, lui-même relié à un conduit 76 ;

- le conduit 62 est relié à un conduit 77 ;

- les conduits 78, 79 relient des vérins de réglage de position 80, 81, auxquelles sont attelées les valves 22, 23, aux conduits 63, 64, respectivement.

Le levier 24 du manipulateur 21 permet :

- de n'appuyer ni sur la valve 22, ni sur la valve 23 ; de mettre en communication les conduits 63, 64 avec le conduit 62 (et donc avec le réservoir 25) ; et d'obturer le conduit 75 ;

- d'appuyer seulement sur la valve 22 ; de mettre alors en communication les conduits 75 et 63 ; de mettre en communication les conduits 64 et 62 ; et, de permettre à un fluide sous pression éventuellement contenu dans le conduit 76 d'être véhiculé vers le vérin 19 du premier distributeur 17 ; ou enfin,

- d'appuyer seulement sur la valve 23 et, par une alimentation analogue à celle qui vient d'être définie, de véhiculer un fluide sous pression éventuellement contenu dans le conduit 76 vers le vérin 20.

Le premier distributeur 17 peut donc être placé, lorsque le conduit 76 contient un fluide sous pression, dans ses deuxième, première et troisième positions respectivement.

Les trois positions de ce premier distributeur 17 correspondent :

- la première position, aux mises en communication des conduits 60 et 65, et, des conduits 61 et 66, et, par exemple, à l'inclinaison du plateau 10 de la pompe principale 7 avec lequel le raccord principal 8 constitue le raccord de refoulement de la pompe 7 ;

- la deuxième position, à l'obturation des conduits 60, 61, 65, 66 ; et,

- la troisième position, aux mises en communication des conduits 60 et 66, et, des conduits 65 et 61, et au refoulement du fluide par le raccord 9 de la pompe principale 7.

Le circuit de la figure 1 comporte en outre :

- un deuxième distributeur 36, a deux positions, muni d'une pédale de commande 37, de ressorts 38 interposés entre la pédale 37 et le distributeur, et d'un vérin de commande 39, d'effet antagoniste des ressorts 38 ; ce deuxième distributeur 36 constituant « la valve de freinage » de ce premier circuit ;

- un troisième distributeur 40, à trois positions, muni d'un ressort 41 le rappelant dans sa première position, et d'un vérin 42, d'effet antagoniste de celui du ressort 41 ; ce troisième distributeur 40, muni de sa commande définie ci-après 83-42, constituant le « moyen de synchronisation » ;

- les raccordements des conduits 54, 74 et 77, tous trois au deuxième distributeur 36, et, du conduit 76 au troisième distributeur 40 ;

- le conduit 82, reliant le vérin 39 au conduit 74 ;

- le conduit 83, reliant le vérin 42 au conduit 74 ;

- le conduit 84, reliant le troisième distributeur 40 au conduit 77 ; et,

- le conduit 85, reliant le troisième distributeur 40 au conduit 60.

Les deux positions du deuxième distributeur 36 correspondent :

- la première position, à la mise en communication progressive des conduits 74 et 77, et, à l'obturation du conduit 54 ; et,

- la deuxième position, à l'obturation du conduit 77, et, à la mise en communication progressive des conduits 54 et 74.

Les trois positions du troisième distributeur 40 correspondent :

- la première position, à la mise en communication des conduits 76 et 85, et, à l'obturation du conduit 84 ;

- la deuxième position, à la mise en communication, par l'intermédiaire d'une restriction 86, réglable 87, des conduits 76 et 84, et, à l'obturation du conduit 85 ; et,

- la troisième position, à la mise en communication (sans restriction) des conduits 76 et 84, et, à l'obturation du conduit 85.

Il doit être observé qu'à la première position du deuxième distributeur 36 correspond la communication des vérins 30, 31 des freins 26, 27, et des vérins 39 et 42 des deuxième et troisième distributeurs, respectivement, avec le réservoir 25 sans pression, donc le non freinage de ces freins et la mise en place du troisième distributeur 40 dans sa première position sous l'action du ressort 41, donc également, la présence d'un fluide sous pression dans les conduits 75 et 76.

Lorsque la pédale 37 est enfoncée, elle commande directement la mise en place du deuxième distributeur 36 dans sa deuxième position, dans laquelle le fluide sous la plus haute des pressions contenu dans l'un des conduits 52, 53 est dirigé vers le conduit 54, puis, avec une pression au début réduite, vers les conduits 74, 83 et 82. Initialement, le fluide, qui parvient dans les vérins 30, 31 des freins 26, 27 est à faible pression, (10 bars), est inapte à commander un freinage « mécanique » important. Par contre, ce fluide a une pression suffisante pour placer le troisième distributeur 40, d'abord dans sa deuxième puis, dans sa troisième position. Ainsi, le fluide contenu dans les conduits 75, 76 et éventuellement dans celui des conduits 63, 64 qui communique, au moment où la pédale 37 est enfoncée, avec le conduit 75, fait retour au réservoir sans pression 25 par les conduits 76 et 77. Sous l'effet du ressort 18, le premier distributeur 17 est rappelé dans sa deuxième position, et le plateau 10 de la pompe 7 revient à l'inclinaison zéro correspondant à une cylindrée nulle. Si le conduit 48 véhiculait initialement le fluide d'alimentation des moteurs 1 et 2, le rappel du plateau 10 de la pompe 7 provoque, d'une part la chute de pression dans les conduits 48, 50 et 52, et d'autre part une élévation importante de la pression dans les conduits 49, 51 et 53, et donc dans le conduit 54 ; le fluide refoulé par les moteurs 1 et 2 dans le conduit 49 ne pouvant plus traverser la pompe 7 sans résistance hydraulique importante, et ne pouvant s'échapper vers le conduit 48 qu'en traversant principalement le conduit 56 et le clapet de décharge taré 58 (tarage élevé, de l'ordre de 300 bars).

Dans cette première phase du freinage, on constate donc l'existence d'un freinage hydrostatique important par les moteurs 1 et 2 euxmêmes, dont le refoulement est entravé. Ce n'est qu'ensuite, lorsque la pression aura augmenté dans le conduit 74, que les vérins 30, 31 pourront être alimentés par un fluide sous une pression augmentée (passant initialement de 10 bars, à 30 à 40 bars), et qu'alors les freins 26, 27 développeront un couple de freinage significatif (de l'ordre de 50 % du couple de freinage hydrostatique des moteurs 1 et 2).

Le circuit de la figure 2 comporte, en complément de ce qu'il a en commun avec le circuit de la figure 1 :

- un quatrième distributeur 43, à trois positions ;

- un cinquième distributeur 45, également à trois positions, attelé au quatrième distributeur 43 par un arbre, ou une liaison rigide 46 ; ce cinquième distributeur 45 constituant « la valve de freinage » de ce circuit ;

- une pédale 44 de commande de ce cinquième distributeur 45 ;

- un ressort 47 de rappel des deux distributeurs 43 et 45 dans leurs premières positions respectives ;

- les raccordements des conduits 54, 74 et 77 au cinquième distributeur 45, et, du conduit 76 au quatrième distributeur 43 ;

- le conduit 84, reliant le quatrième distributeur 43 au conduit 77 ; et,

- le conduit 85, reliant le quatrième distributeur 43 au conduit 60 ; le quatrième distributeur 43 et la liaison rigide 46 constituant le « moyen de synchronisation ».

Les trois positions du cinquième distributeur 45 correspondent :

- la première position, à la mise en communication des conduits 74 et 77, et, à l'obturation du conduit 54 ;

- la deuxième position à l'obturation progressive, par l'intermédiaire d'une restriction réglable 88, du conduit 77, et, à la communication progressive, par l'intermédiaire d'une restriction réglable 89, des conduits 54 et 74 ; et,

- la troisième position, à l'obturation du conduit 77, et, à la mise en communication des conduits 54 et 74.

Les trois positions du quatrième distributeur 43 correspondent :

- la première position, à la mise en communication des conduits 76 et 85, et, à l'obturation du conduit 84 ;

- la deuxième position, à la mise en communication, par l'intermédiaire d'une restriction 86, réglable 87, des conduits 76 et 84, et, à l'obturation du conduit 85 ; et,

- la troisième position, à la mise en communication (sans restriction) des conduits 76 et 84, et, à l'obturation du conduit 85.

Le fonctionnement de ce deuxième circuit est très analogue à celui déjà décrit du circuit dans la figure 1, et y est identique, sauf la simultanéité nouvelle des premières, respectivement deuxièmes, respectivement troisièmes positions des quatrième et cinquième distributeurs, attelés l'un à l'autre par la liaison rigide 46.

On retrouve la même séquence d'action d'abord du freinage hydrostatique procuré par les moteurs 1 et 2, ensuite du complément de freinage procuré par les freins 26 et 27.

On retrouve également dans chacun des circuits l'avantage de la combinaison des deux types de freinage qui permet de prévoir des freins « mécaniques » 26, 27 de dimensions réduites correspondant seulement à une partie du freinage total nécessaire.

Dans chacun des circuits, la seule source de fluide permettant le freinage est constituée par le fluide refoulé, par les moteurs 1 et 2, qui, d'une part, engendre le freinage hydrostatique par les moteurs eux-mêmes, d'autre part, permet la commande des vérins 30, 31 des freins « mécaniques » 26, 27.

De plus, il convient d'observer une particularité importante du fonctionnement ; la pression du fluide refoulé par les moteurs 1 et 2 au moment du freinage hydrostatique a une valeur élevée (de l'ordre de 100 bars), ce qui permet d'adopter des vérins 30,31 ayant des pistons de petites sections, donc des vérins compacts et relativement peu coûteux. En outre, cette pression est obtenue sans devoir mettre en place une pompe haute pression spéciale, qui elle aurait été coûteuse, et qu'il ne faut pas confondre avec, par exemple, de banales pompes de gavage refoulant du fluide à basse pression (de 10 à 20 bars).

Les avantages de l'invention sont donc considérables, puisqu'il y a gain sur les dimensions des freins « mécaniques » 26, 27 ; sur les dimensions de leurs vérins respectifs de commande 30, 31 ; et inutilité de devoir prévoir une pompe haute pression spéciale.

Il aura pu être noté que le freinage hydrostatique nécessite l'existence d'un étranglement, disposé sur le refoulement des moteurs 1 et 2, constituant un moyen sélectif de retenue. Cet étranglement peut être obtenu comme précédemment défini par le réglage de la cylindrée d'une pompe à cylindrée variable ; il peut également être obtenu par un autre moyen, tel que la mise en place, classique connue, sur les refoulements de moteurs alimentés en circuits ouverts, de limiteurs de débit, de préférence pilotés par la pression du fluide contenu dans les conduits d'alimentation : plus cette pression d'alimentation est faible, plus la restriction d'un limiteur de débit a une dimension petite et plus elle entrave la circulation du fluide refoulé par les moteurs.

## Revendication

Circuit de freinage d'au moins un moteur à fluide (1, 2), constitué par :

- ledit moteur à fluide (1, 2), muni d'un premier (4, 6) et d'un deuxième (3, 5) raccord principal,

- une source principale de fluide sous pression (7), munie d'un raccord de refoulement (8),

- un premier conduit principal (48, 50) reliant ledit raccord de refoulement (8) audit premier raccord principal (4, 6) du moteur,

- un deuxième conduit principal (49, 51), branché sur le deuxième raccord principal (3, 5) du moteur,

- un dispositif principal (17- 11- 10) de distribution de fluide susceptible d'occuper au moins des première et deuxième positions, réalisant, dans sa première position, l'alimentation du premier raccord principal (4, 6) du moteur (1, 2) en fluide sous pression provenant du raccord de refoulement (8) de ladite source principale (7), et supprimant, dans sa deuxième position, ladite alimentation du premier raccord principal (4, 6) en fluide sous pression provenant dudit raccord de refoulement (8).

- un moyen sélectif (9) de retenue de fluide, qui est disposé sur le deuxième conduit principal (51, 49), et qui, lorsque le dispositif principal de distribution de fluide est placé dans sa deuxième position, constitue une restriction vis-à-vis de l'écoulement du fluide dans ce deuxième conduit principal, formant alors frein hydrostatique du moteur, et,

- un frein (26, 27), qui est indépendant du moteur, qui y est attelé (28, 29) et qui est muni d'un dispositif (30, 31) de commande à fluide sous pression susceptible d'être relié sélectivement à une source de fluide sous pression, caractérisé en ce qu'il comporte :

- une valve de freinage (36 ;45) a au moins deux positions, qui est munie d'une commande (37 ; 44) de réglage de sa position,

- un conduit de freinage (54-74-73) comprenant deux tronçons (54 et 74-73), qui relient, un premier tronçon (54), le deuxième conduit principal (51, 49) à la valve de freinage (36 ; 45), le deuxième tronçon (74-73), la valve de freinage (36 ; 45) au dispositif de commande (30, 31) du frein indépendant (26, 27), et,

- un conduit de décharge (77) reliant la valve de freinage (36 ; 45) à un réservoir de décharge sans pression (25),

- les au moins deux positions de la valve de freinage (36 ; 45) correspondant, la première position, à la mise en communication du deuxième tronçon (74-73) du conduit de freinage avec le conduit de décharge (77), et, la deuxième position, à la mise en communication des premier (54) et deuxième tronçon (74-73) dudit conduit de freinage et à leur isolement du conduit de décharge (77), et, en ce que le dispositif principal de distribution de fluide (17-11-10) est muni d'une commande (18-19-20) de réglage de sa position, cependant qu'est prévu un moyen de synchronisation des commandes (40-83-42 ; 43-46) de réglage des positions du dispositif principal de distribution de fluide et de la valve de freinage, ce moyen de synchronisation (40-83-42 ; 43-46) réalisant, à partir de la configuration dans laquelle le dispositif principal de distribution de fluide et la valve de freinage sont placés dans leur première position respective, les commandes des mises en place ultérieures de ce dispositif principal de distribution de fluide et de cette valve de freinage dans leur deuxième position respective.

## Claim

Braking circuit for at least one fluid motor (1, 2), consisting of :
- the said fluid motor (1, 2) equipped with a first main connection (4, 6) and with a second main connection (3, 5),
- a main pressurized-fluid source (7) equipped with a delivery connection (8),
- a first main conduit (48, 50) connecting the said delivery connection (8) to the said first main connection (4, 6) of the motor,
- a second main conduit (49, 51) branching off from the second main connection (3, 5) of the motor,
- a main fluid distribution device (17-11-10) capable of occupying at least first and second positions, in its first position ensuring the feeding of the first main connection (4, 6) of the motor (1, 2) with pressurized fluid coming from the delivery connection (8) of the said main source (7) and in its second position cutting off the said feeding of the first main connection (4, 6) with pressurized fluid coming from the said delivery connection (8),
- a selective fluid stop means (9) which is arranged on the second main conduit (51, 49) and which, when the main fluid distribution device is put in its second position, forms a restriction relative to the flow of the fluid in this second main conduit, thus forming a hydrostatic brake of the motor, and
- a brake (26, 27) which is independent of the motor and is coupled to it (28, 29) and which is equipped with a pressurized-fluid control device (30, 31) capable of being connected selectively to a pressurized-fluid source, characterized in that it possesses :
- a brake valve (36 ; 45) with at least two positions, which is equipped with a control (37 ; 44) for adjusting its position,
- a brake conduit (54-74-73) comprising two portions (54 and 74-73), of which a first portion (54) connects the second main conduit (51, 49) to the brake valve (36 ; 45) and the second portion (74-73) connects the brake valve (36 ; 45) to the control device (30, 31) of the independent brake (26, 27), and
- a discharge conduit (77) connecting the brake valve (36 ; 45) to a pressureless discharge tank (25),
- of the at least two positions of the brake valve (36 ; 45), the first position corresponding to the putting in communication of the second portion (74-73) of the brake conduit with the discharge conduit (77) and the second position corresponding to the putting in communication of the first portion (54) and second portion (74-73) of the said brake conduit and to their isolation from the discharge conduit (77), and in that the main fluid distribution device (17-11-10) is equipped with a control (18-19-20) for adjusting its position, whilst there is a means for synchronizing the controls (40-83-42 ; 43-46) for adjusting the positions of the main fluid distribution device and of the brake valve, this synchronization means (40-83-42 ; 43-46) ensuring, in response to the configuration in which the main fluid distribution device and the brake valve are placed in their respective first positions, the controls for the subsequent placing of this main fluid distribution device and this brake valve in their respective second positions.

## Patentanspruch

Bremsschaltung für mindestens einen Fluidmotor (1, 2), bestehend aus :
- dem mit einem ersten (4, 6) und einem zweiten (3, 5) Hauptanschluß versehenen Fluidmotor (1, 2),
- einer mit einem Druckanschluß (8) versehenen DruckfluidHauptquelle (7),
- einer den Druckanschluß (8) mit dem ersten Hauptanschluß (4, 6) des Motors verbindenden ersten Hauptleitung (48, 50),
- einer vom zweiten Hauptanschluß (3, 5) des Motors abzweigenden zweiten Hauptleitung (49, 51),
- einer mindestens eine erste und eine zweite Position einnehmbaren Fluidverteiler-Haupteinrichtung (17-11-10), die in ihrer ersten Position die Speisung des ersten Hauptanschlusses (4, 6) des Motors (1, 2) mit vom Druckanschluß (8) der Hauptquelle (7) kommendem Druckfluid realisiert und in ihrer zweiten Position diese Speisung des ersten Hauptanschlusses (4, 6) mit vom Druckanschluß (8) kommendem Druckfluid unterbindet,
- einem Mittel (9) zum wahlweisen Zurückhalten von Fluid, welches an der zweiten Hauptleitung (51, 49) angeordnet ist und, wenn sich die Fluidverteiler-Hauptvorrichtung in ihrer zweiten Position befindet, eine Sperre gegenüber dem Fluß des Fluids in dieser zweiten Hauptleitung darstellt und so eine hydrostatische Motorbremse bildet, und
- einer vom Motor unabhängigen Bremse (26, 27), die an diesem angekuppelt (28, 29) und mit einer Einrichtung (30, 31) zur Steuerung von wahlweise mit einer Druckfluidquelle verbindbarem Druckfluid versehen ist, dadurch gekennzeichnet, daß er umfaßt :

- ein Bremsventil (36 ; 45) mit mindestens zwei Positionen, welches mit einer Steuerung (37 ; 44) zur Regelung seiner Position versehen ist,

- eine Bremsleitung (54-74-73), umfassend zwei Abschnitte (54 und 74-73), von denen ein erster Abschnitt (54) die zweite Hauptleitung (51, 49) mit dem Bremsventil (36 ; 45) und der zweite Abschnitt (74-73) das Bremsventil (36 ; 45) mit der Steuereinrichtung (30, 31) oer unabhangigen Bremse (26, 27) verbinden, und

- eine Ablaufleitung (77), die das Bremsventil (36 ; 45) mit einem drucklosen Ablaufbehälter (25) verbindet,

- wobei von den beiden Positionen des Bremsventils (36 ; 45) die erste Position der Verbindungsstellung des zweiten Abschnitts (74-73) der Bremsleitung mit der Ablaufleitung (77) entspricht und die zweite Position der Verbindungsstellung des ersten (54) und des zweiten (74-73) Abschnitts der Bremsleitung und deren Trennstellung von der Ablaufleitung (77) entspricht, und

daß die Fluidverteiler-Haupteinrichtung (17-11-10) mit einer Steuerung (18-19-20) zur Einstellung ihrer Position versehen ist, wobei ein Mittel (40-83-42 ; 43-46) zur Synchronisation der Steuerungen zwecks Einstellens der Positionen der Fluidverteiler-Hauptvorrichtung und des Bremsventils vorgesehen ist, welches Synchronisationsmittel (40-83-42 ; 43-46), ausgehend von der Konfiguration, in der sich die FluidverteilerHaupteinrichtung und das Bremsventil in ihrer jeweiligen ersten Position befinden, die Steuerungen zur darauffolgenden Plazierung dieser Fluidverteiler-Hauptvorrichtung und dieses Bremsventils in ihre jeweilige zweite Position realisiert.

Fig_1

Fig. 2